# EUROPÄISCHE PATENTANMELDUNG

(11) **EP 2 100 951 A2**
(43) Veröffentlichungstag der Anmeldung: **16.09.2009**
(21) Anmeldenummer: 09003806.8
(22) Anmeldetag: 16.03.2009
(51) Int. Cl.: C12C 11/00, C12C 12/00, C12C 11/11

(54) **Mischbier mit hohem Vergärungsgrad**

(30) Priorität: 14.03.2008 DE 102008014207
(71) Anmelder: Brandl, Hubert, 85276 Pfaffenhofen (DE)
(72) Erfinder: Landgraf, Johannes, 76229 Karlsruhe (DE); Brandl, Huber, 85276 Pfaffenhofen an der Ilm (DE)
(74) Vertreter: Castell, Klaus

(57) **Zusammenfassung**

Ein Getränk wird mit einem Verfahren hergestellt, bei dem eine teilweise vergorene Flüssigkeit mit einem ersten Hefestamm und eine teilweise vergorene Flüssigkeit mit einem zweiten Hefestamm zusammen gegeben werden. Hierbei sind die zwei Flüssigkeiten Jungbiere und der erste Hefestamm eine obergärige und der zweite Hefestamm eine untergärige Hefe. Durch dieses Verfahren und vorteilhafte Ausführungsvarianten des Verfahrens wird erreicht, ein Getränk herzustellen, bei dem positive gewünschte Stoffe angereichert sind, während unerwünschte negative Stoffe abgereichert sind.

## Beschreibung

Die Erfindung betrifft ein Verfahren zum Herstellen eines Getränkes, bei dem eine teilweise vergorene Flüssigkeit mit einem ersten Hefestamm und eine teilweise vergorene Flüssigkeit mit einem zweiten Hefestamm zusammengegeben werden, und ein nach diesem Verfahren hergestelltes Getränk.

Aus der DE 10 2005 004 874 ist ein Mischbier bekannt, bei dem ein Pilsanteil von 5 % bis 95 % vorliegt, während der restliche Anteil ein Weißbier ist. In dieser Schrift ist auch ein Verfahren beschrieben, bei dem die Mischung von endvergorenen Produkten durch Verwirbelung in einem mit Kohlensäure vorgespannten Mischtank erfolgt.

Auch aus der EP 1 690 925 ist ein Mischbier bekannt. Dieses Mischbier besteht zu 10 % bis 90 % aus einer untergärigen Biersorte, also Lagerbier oder Pilsbier etc., und zum restlichen Teil aus einer obergärigen Biersorte, also Weißbier oder ein anderes obergäriges Bier. Auch hier erfolgt die Mischung, indem die endvergorenen Biersorten in einem mit Kohlensäure auf Überdruck vorgespannten Mischtank erfolgt.

Die Vermischung bereits fertig vergorener Mischbiere führt grundsätzlich zu keiner weiteren Vergärung. In der Mischung sammeln sich die Gärungsreststoffe an. Diese Gärungsreststoffe sind oftmals für unangenehme Nebenwirkungen der Getränke verantwortlich. Der Endvergärungsgrad entspricht rechnerisch dem gewichteten Mittelwert der beiden Vergärungsgrade der zusammengegebenen Flüssigkeiten.

Der Erfindung liegt die Aufgabe zu Grunde, das gattungsgemäße Verfahren zum Herstellen eines Getränkes weiter zu entwickeln und ein mit diesem Verfahren hergestelltes Produkt vorzustellen.

Diese Aufgabe wird mit einem gattungsgemäßen Verfahren gelöst, bei dem die zwei Flüssigkeiten Jungbiere sind, der erste Hefestamm eine obergärige Hefe und der zweite Hefestamm eine untergärige Hefe ist.

Erfreulicherweise hat sich herausgestellt, dass durch das Zusammengeben derartiger Flüssigkeiten eine Gärung initiiert wird, durch die erwünschte Inhaltsstoffe des Getränks vermehrt und unerwünschte Inhaltsstoffe reduziert werden. Die mit dem Verfahren hergestellten Getränke zeichnen sich daher durch eine Anreicherung vorteilhafter Eigenschaften, wie z.B. besondere Bekömmlichkeit, geringer Kaloriengehalt, geringer Allergengehalt, geringer Gehalt an langkettigen Alkoholen etc. aus.

Die Veränderungen ergeben sich infolge der besonderen Anpassung der Hefemischung und die darauf folgenden besonderen Gärschritte. Dabei wirkt eine Hefemischung, die anders arbeitet als die beiden getrennten Hefen. Folglich baut sie andere Substanzen ab und bildet andere Gärnebenprodukte, vor allem weniger negative Gärnebenprodukte.

Es handelt sich somit nicht um eine gewöhnliche Nachvergärung, die sonst nach dem Einschlauchen stattfindet.

Bei dem erfindungsgemäßen Verfahren geht es nicht um das temperaturgesteuerte Einschlauchen in ein Lagergefäß, da dabei nicht verschiedene Jungbiere gemischt werden. Die zwei Jungbiere werden bevorzugt in einem Mischungsverhältnis zwischen 25/75 und 75/25 gemischt.

Der Ausstoßvergärungsgrad der fertig vergorenen Mischung liegt nahe am Endvergärungsgrad, vorzugsweise liegen weniger als 2 % Differenz zwischen Ausstoßvergärungsgrad und Endvergärungsgrad.

Um negative Reaktionen während der Gärung zu vermeiden, wird vorgeschlagen, dass mindestens eine Flüssigkeit vor dem Mischen temperiert wird und die Volumenströme der Flüssigkeiten so abgestimmt werden, dass die Mischtemperatur der Flüssigkeitsmischung in einem vorgegebenen Temperaturfenster liegt. Dieses Temperaturfenster ist kleiner als 5 Kelvin und vorzugsweise sogar kleiner als 3 Kelvin.

Verfahrenstechnisch ist es vorteilhaft, wenn die Flüssigkeitsmischung über einen vorgegebenen Zeitraum im Temperaturfenster gehalten wird. Dieser Zeitraum liegt in der Regel bei einem oder mehreren Tagen. Er kann sich jedoch auch über Wochen erstrecken.

Vorteilhaft ist es, wenn der Druck in der Flüssigkeitsmischung geregelt wird, um die Flüssigkeitsmischung in einem Temperaturfenster zu halten.

Das erfindungsgemäße Verfahren ist besonders vorteilhaft bei zumischenden Flüssigkeiten einzusetzen, bei denen die optimalen Gärtemperaturen der Hefestämme mehr als 5 Kelvin und vorzugsweise mehr als 10 Kelvin auseinander liegen.

Eine spezielle vorteilhafte Variante des Verfahrens sieht vor, dass das Getränk ein Weizenbier aufweist. Vorzugsweise weist das Getränk auch ein Gerstenbier auf.

Vielfältige Variationen des Verfahren ergeben sich dadurch, dass nach dem Zusammengeben der zwei Flüssigkeiten eine weitere Flüssigkeit zugegeben wird.

Das der Erfindung zu Grunde liegende Ziel wird vor allem dann erreicht, wenn die Flüssigkeiten nach dem Zusammengeben weiter zu einem Endprodukt vergären. Dabei ist es vorteilhaft, wenn nach dem Zusammengeben der Flüssigkeiten eine schnellere Vergärung durchgeführt wird. Dies kann durch Einstellung der Parameter wie Druck und Temperatur, durch Zugabe weiterer Flüssigkeiten oder allein durch das Zusammengeben der unvergorenen noch Hefe aufweisenden Jungbiere erzielt werden.

Das Verfahren wird vorzugsweise so lange durchgeführt bzw. die Vergärung der zusammen gegebenen Jungbiere wird vorzugsweise so geführt, dass ein im folgenden beschriebenes Getränkt entsteht.

Die der Erfindung zu Grund liegende Aufgabe wird daher auch durch ein Getränk gelöst, das nach einem oben beschriebenen Verfahren hergestellt ist und bei dem das Endprodukt mindestens einen Stoff, der kein bei der Gärung entstehender Alkohol ist, aufweist, dessen Konzentration im Endprodukt höher ist als die Konzentration in der Mischung direkt nach dem Zusammengeben der Flüssigkeiten.

Hierbei kann die Konzentration im Endprodukt um 10 %, vorzugsweise mehr als 30 %, besonders bevorzugt mehr als 50% geringer sein als die Konzentration in der Mischung direkt nach dem Zusammengeben der Flüssigkeiten. Kumulativ oder alternativ kann das Getränk eine Konzentration an einem Stoff aufweisen, die mehr als 10 %, vorzugsweise mehr als 30 % und besonders bevorzugt mehr als 50 % höher ist als die Konzentration in der Mischung direkt nach dem Zusammengeben der Flüssigkeiten.

Der Stoff, dessen Konzentration verringert wird, kann ein Stoff aus der Gruppe folgender Stoffe sein: Aminostickstoff, bestimmte Aminosäuren, insbesondere basische Aminosäuren, Physiologisch ungünstige Ester, Fettsäuren, insbesondere niedere freie Fettsäuren, Schwefelverbindungen, Phosphate, Zucker, Glycerin, Ester wie z.B. Ethylacetat und Isoamylacetat, höhere Alkohole (bis zu den C6-Verbindungen) z.B. Phenyl-EthylAlkohol, Propanol, Isobutanol, Methylbutanol etc., Fuselöle, die vor allem bei schlechter Aminosäureausstattung der Würze gehäuft auftreten, Würze-Proteine, die nun verstärkt abgebaut werden, Tryptophenol, dessen Gehalt bei forciert hergestellten Bieren bis über 4 mg / Liter betragen kann, Phenol, Tyrosol, Diacetyl-Vorläufer Acetolactat, Diacetyl / Butandion, Pentandion, Acetohydroxybutyrat, Anthocyanogene, Acetoin, Extraktbestandteile des Bieres, weil sie nun noch weiter vergoren werden, Dodecansäureesther, Propionsäure, Merkaptane, Acetaldehyd, Dimethylsulfid, Oxalat, Histamin, Tyramin.

Der Stoff, dessen Konzentration erhöht wird, ist vorzugsweise ein Stoff aus der Gruppe folgender Stoffe: Polyphenole und Phenolsäuren (Antioxidantien), transaminierte Aminosäuren, Isoleucin, Anthocyanogene, Anthocyanine, Biflane, Catechin und Epicatechin, Rutin, Adenin, Kämpferol, Isohumolone und Hopfenöle, die aus dem Hopfen und nicht aus der Hefe stammen, physiologisch und aromatisch günstige Ester, physiologisch und aromatisch günstige Aldehyde, Glutandextrine, Gluconat, L-Lactat, Acetat, L-Malat, Citrat, Carotin / Provitamin A, Retinol / Vitamin A, Thiamin / Vitamin B1, Ribovlavin / Vitamin B2, Niacin / Vitamin B3, Pathothensäure / Vitamin B5, Pyridoxin / Vitamin B6, Folsäure / Vitamin B9, Cyanocobalamin / Vitamin B12, Calciferol / Vitamin D, Tocopherol / Vitamin E, Biotin / Vitamin H.

Darüber hinaus gibt es Stoffe, deren Konzentration sich je nach Gärumgebung erhöht oder senkt: Valin und Isoleucin, Purine und biogene Amine.

Die mit dem Verfahren hergestellten Getränke haben als Mischbier, Konzentrat oder als Extrakt eines derartigen Mischbieres folgende Vorteile: Immunstärkung, gegen Erreger von außen und auch gegen vagabundierende Zellen, Verdauungsförderung und Verbesserung der Nährstoffaufnahme, Stabilisierung des Herz-Kreislauf-Systems, Nahrungsergänzung z.B. zur Vitamin- und Mineralversorgung, Mittel zur Vermeidung von Veränderungen im Erbgefüge und als Rohstoff für Medikamente.

Ursächlich für die bisherige Gestaltung bekannter Mischverfahren ist die Tatsache, dass sich die unterschiedlichen untergärigen bzw. obergärigen Hefen, wenn sie in nicht endvergorenem Zustand zusammengeführt werden, sich gegenseitig negativ beeinflussen, sodass die Hefen zerfallen und ein ungenießbares Produkt entsteht. Aus diesem Grund mussten mindestens eine und vorzugsweise beide Biersorten endvergoren sein, um einen Kontakt der beiden Hefetypen zu verhindern.

Es gibt zahlreiche Veröffentlichungen, die das erhebliches Risiko beschreiben, dass störende andersartige Hefen ein Jungbier verderblich machen oder gar völlig zerstören. Dies geschehe insbesondere dann, wenn obergärige und untergärige Jungbiere in Verbindung gebracht oder gar intensiv gemischt werden.

Das erfindungsgemäße Verfahren erlaubt das Mischen unfertig vergorener Jungbiere mit jeweiligen gärfähigem Hefeanteil unter Vermeidung der bisher befürchteten und als unvermeidlich betrachteten Zerstörung der Hefen.

Als Jungbiere sollen im Weiteren nicht fertig vergorene Biere mit einem Anteil gärfähiger Hefe bezeichnet werden, bei denen der Endvergärungsgrad noch nicht erreicht ist. Vorzugsweise liegen diese Jungbiere bei einem Endvergärungsgrad, der mindestens 5 %, vorzugsweise mindestens 10 % unter dem Endvergärungsgrad liegt.

In einem Ausführungsbeispiel werden ein untergäriges Jungbier und ein obergäriges Jungbier ohne vorherige Filtration gemischt, indem die Temperaturen so eingestellt werden, dass die resultierende Mischtemperatur nach der Mischung innerhalb eines erlaubten Temperaturfensters liegt, bei dem die Zerstörung einer oder beider Hefen nicht stattfindet. Dieses erlaubte Temperaturfenster ergibt sich, wie überraschend festgestellt wurde, als sehr schmaler Temperaturbereich oberhalb der Gärtemperatur des untergärigen Jungbieres aber unterhalb der Gärtemperatur des obergärigen Jungbieres. Im Beispielsfall lag die Gärtemperatur des untergärigen Jungbieres bei 3,5 °C, während die Gärtemperatur des obergärigen Jungbieres bei 22 °C lag.

Das erlaubte Temperaturfenster kann zum Beispiel nur 2 °C breit sein, das heißt die Toleranz oberhalb und unterhalb der Zieltemperatur der Mischung kann zum Beispiel nur ± 1 °C betragen. Bei anderen Hefen liegt die Toleranz bei ± 2 °C oder ± 3 °C.

Ohne weitere Hilfen und Vorrichtungen kann eine Mischung aus den beiden Jungbieren in einem bestimmten Verhältnis nur die daraus resultierende physikalische direkte Mischtemperatur ergeben. Bei einer Mischung 50 zu 50 liegt die Mischtemperatur genau in der Mitte der beiden Ausgangstemperaturen, wenn von der gleichen spezifischen Wärmekapazität der Jungbiere ausgegangen wird. Falls nun diese direkte Mischtemperatur nicht in das erlaubte Temperaturfenster fällt - und das ist in der Regel der Fall - würde der unerwünschte Zerstörungsprozess der Hefen in Gang gesetzt.

Als Lösung ist daher vorgesehen, dass beide Jungbiere auf dem Weg in ein Mischelement so vortemperiert werden - vorzugsweise kurzfristig und in räumlicher Nähe -, dass die Mischtemperatur vorzugsweise genau in der Mitte des erlaubten Temperaturfensters liegt. Die Vortemperierung kann zum Beispiel eine Vorkühlung sein, wenn die Mischtemperatur abgesenkt werden muss, um im erlaubten Temperaturfenster zu liegen, oder eine Vorwärmung, wenn die Mischtemperatur erhöht werden muss, um im erlaubten Temperaturfenster zu liegen.

Das erlaubte Temperaturfenster hängt von den verwendeten Hefesorten und den zu mischenden Jungbieren ab.

Ein anderes Ausführungsbeispiel verwendet mehr als zwei Jungbiere oder andere zusätzliche Bestandteile der Mischung, wobei auch hier das Ziel erreicht wird, dass die Mischung in ihrer Temperatur innerhalb eines erlaubten Temperaturfensters liegt, bei dem sich Komponenten bzw. unterschiedlichen Hefen nicht zerstören und dadurch die Herstellung eines wohlschmeckenden Nahrungsmittels oder Getränks ermöglicht wird.

In einer weiteren Ausführungsvariante werden ein oder mehrere Ultrakurzzeiterhitzer oder andere Behandlungsverfahren vorgesehen, die die Mischkomponenten bzw. Jungbiere vor der Mischung zusätzlich vorteilhaft beeinflussen. Der Ultrakurzzeiterhitzer kann auch nach der Mischung verwendet werden.

Das mit dem Verfahren hergestellte Getränk unterliegt nach der Mischung einem weiteren Gärprozess, sodass das Endprodukt einen höheren Vergärungsgrad erreicht. Dieser erhöhte Vergärungsgrad liegt vorzugsweise oberhalb dem Vergärungsgrad der mit den einzelnen Jungbieren ohne Mischung der Biere vorgelegen hätte.

In dem Ausführungsbeispiel wird eine Temperaturregelung in einem Mischtank oder in einem nachfolgenden Tank, in dem die Mischung nach dem Mischprozess verweilt, vorgeschlagen. Diese Temperaturregelung ermöglicht es, die Temperatur der Mischung im erforderlichen Temperaturfenster zu halten. Dies kann beispielsweise durch eine integrierte Temperiereinrichtung wie beispielsweise einen Wärmetauscher erreicht werden. Damit kann die auftretende Reaktionswärme bzw. Reaktionsenergie, die beim weiteren Gärprozess frei wird, abgeführt werden. Auf diese Weise kann auch ein zeitlich veränderliches und ein von Zustandsgrößen wie Dichte und Vergärungsgrad des Mischbieres abhängiges Temperaturfenster zuverlässig geregelt werden.

Die folgenden Abbildungen zeigen in
- Figur 1: schematisch die Temperaturregelung in einem Mischtank und
- Figur 2: schematisch eine Steuereinrichtung zur Temperaturregelung in einem Mischtank.

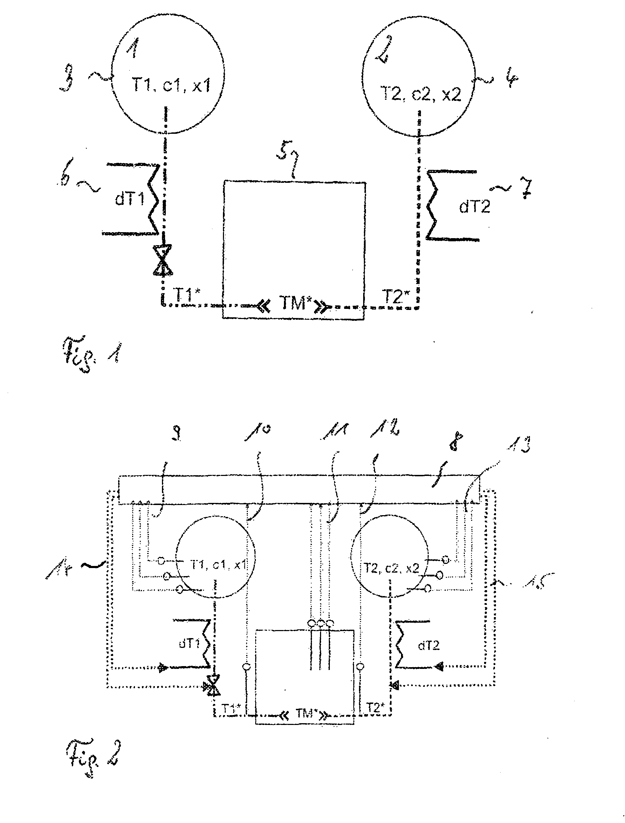

Zwei Jungbiere 1 und 2 sind in Figur 1 schematisch in Gärtanks 3 und 4 dargestellt. Das Jungbier 1 ist ein untergäriges Pils und das Jungbier 2 ein obergäriges Weisbier. Im Gärbehälter 3 befindet sich das Jungbier 1 mit einer Temperatur T1 von beispielsweise 4 °C. Im Gärbehälter 4 befindet sich das Jungbier 2 mit einer Temperatur T2 von 21 °C.

Auf dem Weg zum Mischtank 5 wird das Jungbier 1 in seiner Temperatur mittels eines Wärmetausches 6 erwärmt oder abgekühlt, sodass es beim Einströmen in den Mischtank 5 die Temperatur T1^{*}=T1 + dT1 aufweist.

Auf dem Weg zum Mischtank 5 wird das Jungbier 2 in seiner Temperatur mittels des Wärmetauschers 7 erwärmt oder abgekühlt, sodass es beim Einströmen in den Mischtank 5 die Temperatur T2^{*}=T2 + dT2 aufweist.

Die resultierende Mischtemperatur TM^{*} ergibt sich gemäß der physikalischen Mischtemperaturformel aus T1^{*} und T2^{*} unter Berücksichtigung der Massenverhältnisse m1 und m2 und der spezifischen Wärmekapazitäten c1 und c2 der Jungbiere 1 und 2, die gemischt werden. Formel: TM* (c1 m1+c2 m2) = (T1+dT1) c1 m1 + (T2+dT2) c2 m2. Im Gegensatz dazu würde sich ohne die Temperaturbeeinflussungen dT1 und dT2 eine direkte Mischtemperatur TM nach folgender Formel ergeben: TM (c1 m1+c2 m2) = T1 c1 m1 + T2 c2 m2.

Es gibt mehrere Lösungen, bei gegebenem Mischverhältnis m1 / m2, da man dT1 und dT2 als Variable einstellen kann. Dadurch erhält man die erforderliche Freiheit für die Steuerung des Mischverfahrens.

Die Figur 2 zeigt das in der Figur 1 dargestellte Mischsystem ergänzt durch ein Steuergerät 8, das über eine Vielzahl an Signaleingängen 9 bis 13 verfügt und über Steuerausgänge 14, 15 zur Steuerung von Massendurchflüssen, Wärmeleistungen und letztlich auch Temperaturen.

Die sensorisch erfassten Größen sind zum Beispiel die Temperaturen T vor der Wärmetemperaturbeeinflussung und T^{*} nach dem Wärmetauscher. Zudem können die spezifischen Wärmekapazitäten c und die Vergärungsgrade x erfasst werden, direkt oder indirekt. Außerdem sind die Massenströme dm/dt messbar, zum Beispiel über die Kombination aus Volumensptrommessung und Dichtemessung.

Die Steuergrößen an den Steuerausgängen sind zum Beispiel Heizleistung oder Kühlleistung an den Wärmetauschern, um eine bestimmte Temperatur T^{*} nach dem Wärmetauscher zu erreichen. Letztlich werden auch im Zusammenhang mit der Steuerung der Massenströme dm1/dt bzw. dm2/dt die Mischereingangstemperaturen T1^{*} und T2^{*} sowie die resultierende Mischtemperatur TM^{*} geregelt, die unter Wirkung der Wärmetauscher innerhalb des erlaubten Temperaturfensters liegen kann, während dies ohne Temperaturbeeinflussung aus physikalischen Gründen für die gewünschten Massen-Mischungsverhältnisse m1/m2 der beiden Biersorten nicht gelingen würde.

## Patentansprüche

1. Verfahren zum Herstellen eines Getränkes, bei dem eine teilweise vergorene Flüssigkeit mit einem ersten Hefestamm und eine teilweise vergorene Flüssigkeit mit einem zweiten Hefestamm zusammengegeben werden ***dadurch gekennzeichnet, dass*** die zwei Flüssigkeiten Jungbiere sind, der erste Hefestamm eine obergärige und der zweite Hefestamm eine untergärige Hefe ist.

2. Verfahren nach Anspruch 1, ***dadurch gekennzeichnet, dass*** mindestens eine Flüssigkeit vor dem Mischen temperiert wird und die Volumenströme der Flüssigkeiten so abgestimmt werden, dass die Mischtemperatur der Flüssigkeitsmischung in einem vorgegebenen Temperaturfenster liegt.

3. Verfahren nach einem der vorhergehenden Ansprüchen, ***dadurch gekennzeichnet, dass*** das Temperaturfenster kleiner als 5 Kelvin, vorzugsweise kleiner als 3 Kelvin ist.

4. Verfahren nach einem der vorgehenden Ansprüche, ***dadurch gekennzeichnet, dass*** die Flüssigkeitsmischung über einen vorgegebenen Zeitraum im Temperaturfenster gehalten wird.

5. Verfahren nach einem der vorgehenden Ansprüche, ***dadurch gekennzeichnet, dass*** der Druck in der Flüssigkeitsmischung geregelt wird, um die Flüssigkeitsmischung in einem Temperaturfenster zu halten.

6. Verfahren nach einem der vorgehenden Ansprüche , ***dadurch gekennzeichnet, dass*** die optimalen Gärtemperaturen der Hefestämme mehr als 5 K und vorzugsweise mehr als 10 K auseinander liegen.

7. Verfahren nach einem der vorgehenden Ansprüche, ***dadurch gekennzeichnet, dass*** das Getränk ein Weizenbier aufweist.

8. Verfahren nach einem der vorhergehenden Ansprüche, ***dadurch gekennzeichnet, dass*** das Getränk ein Gerstenbier aufweist.

9. Verfahren nach einem der vorhergehenden Ansprüche, ***dadurch gekennzeichnet, dass*** nach dem Zusammengeben der zwei Flüssigkeiten eine weitere Flüssigkeit zugegeben wird.

10. Verfahren nach einem der vorhergehenden Ansprüche, ***dadurch gekennzeichnet, dass*** die Flüssigkeiten nach dem Zusammengeben weiter zu einem Endprodukt vergären.

11. Verfahren nach Anspruch 10, ***dadurch gekennzeichnet, dass*** nach dem Zusammengeben der Flüssigkeiten eine schnellere Vergärung durchgeführt wird.

12. Getränk, hergestellt nach einem Verfahren nach einem der Ansprüche 1 bis 11 bei dem das Endprodukt mindestens einen Stoff aufweist, dessen Konzentration im Endprodukt niedriger ist als die mittlere Konzentration dieses Stoffes in den zusammengegebenen Flüssigkeiten.
